**Europäisches Patentamt**

**European Patent Office**

**Office européen des brevets**

(19)

(11) Veröffentlichungsnummer: **0 233 522**
**B1**

(12) **EUROPÄISCHE PATENTSCHRIFT**

(45) Veröffentlichungstag der Patentschrift:
16.05.90

(51) Int. Cl.⁵: **B60G 17/04**

(21) Anmeldenummer: 87101254.8

(22) Anmeldetag: 29.01.87

(54) **Niveau- und Neigungsregelung für ein Fahrzeug.**

(30) Priorität: 08.02.86 DE 3604068
22.11.86 DE 3639995

(43) Veröffentlichungstag der Anmeldung:
26.08.87 Patentblatt 87/35

(45) Bekanntmachung des Hinweises auf die Patenterteilung:
16.05.90 Patentblatt 90/20

(84) Benannte Vertragsstaaten:
CH FR GB IT LI

(56) Entgegenhaltungen:
DE-A- 3 427 902
DE-B- 1 122 386
FR-A- 1 399 788
FR-E- 91 530

(73) Patentinhaber: Tuczek, Franz, Dr., Am Nagoldhang 14,
D-7530 Pforzheim(DE)

(72) Erfinder: Tuczek, Franz, Dr., Am Nagoldhang 14,
D-7530 Pforzheim(DE)

(74) Vertreter: Twelmeier, Ulrich, Dipl.Phys. et al,
Patentanwälte Dr. Rudolf Bauer Dipl.-Ing.Helmut
Hubbuch, Dipl.Phys. Ulrich Twelmeier
Westliche 29-31 (Am Leopoldplatz),
D-7530 Pforzheim(DE)

## Beschreibung

Die Erfindung bezieht sich auf eine Niveau- und Neigungsregelung für ein Fahrzeug mit mindestens zwei, jeweils einem Rad einer Achse oder einer Seite zugeordneten pneumatischen oder hydropneumatischen Federelementen, die einen beweglichen Trennkolben aufweisen, der auf der einen Seite von der Radlast und auf der anderen Seite von einem diese abstützenden pneumatischen Druck eines in einem Gehäuse eingeschlossenen Gaspolsters beaufschlagt ist.

Derartige bekannte Federelemente ermöglichen eine Niveau- und Neigungsregelung durch Anpassung des Ölvolumens oder der Gasmenge an eine statische Änderung der Radlast beim Beladen und Entladen und eine quasistatische Änderung der Radlast in von Massenkräften beeinflußten Fahrzuständen bei Kurvenfahrt oder beim Bremsen und Beschleunigen.

Bei einer hydraulisch-pneumatischen Federung (deutsche Auslegeschrift DE-AS 1 122 386) sind eine Niveau- und Neigungsregelung für ein vierrädriges Fahrzeug bekannt mit drei Niveaureglern zwischen Rad und Aufbau, die auf das Ölvolumen durch Zu- oder Ablassen von Öl einwirken, und mir vier jeweils mit dem Trennkolben verbundenen Füllungsreglern, durch die eine Rückführung der Trennkolben in eine Mittelage durch Zu- oder Ablassen von Gas erfolgt. Sowohl die Gasmenge wie auch das Ölvolumen sind veränderlich und der Aufwand für die Lageregelung ist dadurch in nachteiliger Weise groß.

Eine Regelung mit Anpassung der Gasmenge nach dem Oberbegriff des Anspruchs 1 ist bekannt (deutsche Offenlegungsschrift DE-OS 34 27 902), bei der jeweils den einzelnen Federelementen zugeordnete Lageregelelemente vorhanden sind, die die Lage des Trennkolbens in Bezug zu einer Soll-Lage erfassen und bei einer Abweichung von der Soll-Lage Gas aus dem Federelement über eine Ablaßleitung in einen Niederdruck-Speicher ablassen oder ihm über eine Speiseleitung Gas aus einem Hochdruckspeicher zuführen, der durch einen Verdichter aus dem Niederdruckspeicher geladen wird. Darüber hinaus sind für eine Federgruppe mit zwei Federelementen, die in von Massenkräften beeinflußten Fahrzuständen ein Stützmoment aufbringen, Einrichtungen vorgesehen, die eine direkte Gasströmung aus dem Gaspolster des ausgefederten Federelements in das Gaspolster des eingefederten Federelements bewirken, wobei die Verbindungen der Ablaßleitungen zum Niederdruck-Speicher und der Speiseleitungen zum Hochdruckspeicher sperrbar sind. In aufwendiger Weise sind für eine Niveau- und Neigungsregelung eine Vielzahl von Hilfsmitteln in Form von zwei Gasspeichern, zwei Verdichtern und mehreren Regelelementen in den Ablaß- und Speiseleitungen erforderlich.

Aufgabe der Erfindung ist, eine gegenüber dem Bekannten vereinfachte Niveau- und Neigungsregelung für Fahrzeuge zu schaffen. Diese Aufgabe ist durch die in den Patensansprüchen 1, 2 und 3 gekennzeichneten Merkmale gelöst, wobei in vorteilhafter Weise für die Niveau- und Neigungsregelung lediglich ein Verdichter, ein Gasspeicher und ein bzw. zwei Sperreinrichtungen erforderlich sind.

Allen Lösungen ist gemeinsam, daß bei eingeschalteter Verdichterfunktion und offenem Durchgang einer Sperreinrichtung eine Anpassung der Gasmenge in den Gaspolstern der Federelemente an eine erniedrigte Traglast durch Zuspeisen von Gas aus einem Gasspeicher unmittelbar oder mittels des Verdichters erfolgt und eine Anpassung an eine erhöhte Traglast durch Ablassen von Gas in einen Gasspeicher unmittelbar oder mittels des Verdichters erfolgt, bis die Soll-Lage der Trennkolben und ein dieser entsprechendes sogenanntes Niveauvolumen der Gaspolster erreicht ist. Der Gasspeicher kann sowohl als Niederdruckspeicher oder auch als Hochdruckspeicher ausgebildet sein. Bei der Lösung nach Patentanspruch 3 muß je nach Ladezustand des Gasspeichers eine Sperreinrichtung von zwei Sperreinrichtungen offen und die andere gesperrt sein. Beide Sperreinrichtungen können jedoch offen sein, wenn dafür gesorgt ist, daß bei Überdruck des Gasspeichers gegenüber den Gaspolstern die erste Verbindungsleitung durch zusätzliche, auf den Überdruck ansprechende Mittel sperrbar ist und bei Unterdruck des Gasspeichers die zweite Verbindungsleitung durch auf den Unterdruck ansprechende Mittel sperrbar ist.

Nach der so bewirkten Niveauregelung werden die Sperreinrichtungen zweckmäßig geschlossen und kann eine Neigungsregelung in folgender Weise erfolgen:

Bei zwei eine Federgruppe bildenden Federelementen ist in von Massenkräften beeinflußten Fahrzuständen der Trennkolben des ausgefederten Federelements aus der Soll-Lage heraus und der des eingefederten Federelements aus der Soll-Lage in das Gaspolster hinein verschoben, wobei das Gasvolumen in dem ausgefederten Federelement um das Maß des Ausfedervolumens und das in dem eingefederten Federelement um das Maß des Einfedervolumens vom Niveauvolumen abweicht. Bei einer eingeschalteten Verdichterfunktion sind durch die Lageregelelemente, die die Lage des Trennkolbens oder das Gaspolstervolumen in irgend einer Weise feststellen, die Ablaßleitung des ausgefederten Federelements über die Eintrittskammer und die Austrittskammer des Verdichters und die Speiseleitung des eingefederten Federelements miteinander verbunden. Dadurch kann mit Hilfe des Verdichters ein Gastransport vom ausgefederten zum eingefederten Federelement stattfinden, wobei das Gasvolumen des ausgefederten Federelements in Richtung auf das Niveauvolumen abnimmt und das Gasvolumen des eingefederten Federelements in Richtung auf das Niveauvolumen zunimmt. Es ist eine Eigenart der erfindungsgemässen Regelung, daß - gleiche Niveauvolumina in beiden Federelementen und isotherme Zustandsänderung des Gases vorausgesetzt - gleichzeitig in jedem Federelement das Niveauvolumen wieder erreicht wird, sobald eine Gasmenge transportiert ist, die durch den Minderdruck des vorher ausgefederten, den diesem gleichen Zusatzdruck des vorher eingefederten Federelements und die Größe des Niveauvolumens bestimmt ist und Trimm-Menge genannt wird. Auch bei einer polytropen Zustandsänderung wird das Niveauvolumen in jedem Federelement nahezu gleichzeitig erreicht, sobald die Trimm-Menge transportiert ist.

Der Gastransport aus dem ausgefederten in das eingefederte Federelement kann mit geringem Energiebedarf so schnell erfolgen, daß der Aufbau in durch Massenkräfte beeinflußten Fahrzuständen praktisch parallel zur Straße bleibt. Nach Ende des genannten Fahrzustandes erfolgt bei Geradeausfahrt ein Rückfluß der Trimm-Menge aus dem vorher eingefederten Federelement in das vorher ausgefederte Federelement, wobei in beiden Federelementen wieder das Niveauvolumen erreicht wird.

Wenn Federelemente auf beiden Seiten einer Fahrzeugachse eine Federgruppe bilden, ist durch den angegebenen Gastransport ein Aufrichten des Aufbaus bis zur Niveaulage - im allgemeinen parallel zur Straße - erreichbar, so daß in der Kurve dieselben Ein- und Ausfederwege zur Verfügung stehen wie bei Geradeausfahrt. So können in vorteilhafter Weise Fahrsicherheit und Fahrkomfort erhöht werden.

Die Verdichterleistung ist nachweisbar so klein, daß ihr Anteil an der Antriebsleistung eines Fahrzeugmotors nur mit einem geringen Prozentsatz zu berücksichtigen ist. Auf den Kraftstoffverbrauch hat die Verdichterarbeit einen kaum nennenswerten Einfluß, da sie bei einer Fahrt auf normalen Straßen lediglich in größeren Intervallen auftritt. Die Verdichterarbeit kann vermindert werden, wenn der Antrieb des Verdichters mit Energie aufnehmenden und abgebenden Mitteln, beispielsweise in Form einer Schwungmasse versehen ist, die beim Gasrückfluß Energie speichern und beim Gastransport abgeben.

Bei einer Zusammenfassung von mehr als zwei Federelementen zu einer Federgruppe, beispielsweise bei einem volltragend mit einer Federung nach der Erfindung ausgerüsteten Vierradfahrzeug können die Ablaßleitungen aller Federelemente gemeinsam an die Eintrittskammer eines Verdichters und die Speiseleitungen gemeinsam an die Austrittskammer angeschlossen und mit Sperreinrichtungen versehene Verbindungsleitungen zu einem Gasspeicher nach den Ansprüchen 1 bis 3 vorgesehen sein, wobei in allen durch Massenkräfte beeinflußten Fahrzuständen, sowohl bei Kurvenfahrt wie auch beim Bremsen oder Beschleunigen der Aufbau in der beschriebenen Weise bis zur Lage parallel zur Straße aufgerichtet werden kann oder parallel zur Straße aufgerichtet werden kann oder parallel bleibt, indem die jeweils erforderliche Trimm-Menge aus den ausgefederten Federelementen zugeführt wird, bzw. wieder zurückfließt, alles betrachtet bei geschlossenen Sperreinrichtungen.

An sich kann auch bei offenen Sperreinrichtungen in den genannten Fahrzuständen Gastransport und Gasrückfluß stattfinden. Jedoch ist damit ein ständiger Gasaustausch mit dem Gasbehälter verbunden, der nicht gewollt ist und weit mehr Verdichtungsarbeit erfordert als bei geschlossenen Sperreinrichtungen.

Wenn die Trennwände aller Federelemente ihre Soll-Lage erreicht haben und keine Trimm-Menge benötigt wird, kann ein Verdichter, der mit einem entsprechend großen, das Verdichtungsverhältnis begrenzenden schädlichen Raum ausgerüstet ist, auch ständig laufen. Zum Zweck einer gestoppten Gasförderung bei laufendem Verdichter können auch andere, aus dem Verdichterbau bekannte Mittel vorgesehen werden.

Da die erforderlichen Trimm-Mengen verhältnismäßig klein und bei Gas ohnehin die Widerstandsziffern einer Gasströmung gering sind, können die Ablaß- und Speiseleitungen mit kleinem Querschnitt ausgeführt werden, beispielsweise für ein Personenkraftfahrzeug in den Abmessungen der üblichen Bremsleitungen einer hydraulischen Bremsanlage.

In vorteilhafter Weise kann bei einer volltragenden Anwendung der Erfindung für eine Achse oder für alle Achsen bzw. Räder eines Fahrzeuges auf in der Kurve oder beim Bremsen wirksame, stabilisierende Federmittel, beispielsweise in Form von Torsionsstäben verzichtet werden, wenn durch entsprechend schnellen Transport und Rückfluß der Trimm-Menge in diesen Fahrzuständen keine oder nur eine geringe Neigung des Aufbaus eintritt. In weiterhin vorteilhafter Weise kann so auch eine Verhärtung der Einzelradfederung durch stabilisierende Federmittel vermieden werden.

Wenn bei einem Kraftfahrzeug mit mehr als drei Rädern, beispielsweise vier Rädern eine Verteilung des Aufbaugewichts auf vier volltragende hydropneumatische Federelemente erfolgt und alle Federelemente unabhängig voneinander mit je einem Niveauregler ausgerüstet sind, kann ein gefährlicher Gleichgewichtszustand eintreten, bei dem zwei einander diagonal gegenüberliegende Federelemente das Aufbaugewicht alleine oder nahezu alleine tragen und die zu den anderen beiden Federelementen gehörenden Räder keine oder nur eine geringe Bodenhaftung haben. Dieser Fahrzustand wird bei bekannten hydropneumatischen volltragenden Federungen meist in der Weise ausgeschlossen, daß zwei Federelemente einer Achse ölseitig verbunden sind und nur drei Höhenregler verwendet werden. Bei der erfindungsgemäßen Regelung sind die Gaspolster der einzelnen Federelemente bei Aufbauschwingungen immer wieder miteinander verbunden, so daß der angegebene, mit einem Verlust der Bodenhaftung verbundene Gleichgewichtszustand nicht eintreten kann. Vielmehr wird in vorteilhafter Weise bei der jeweiligen Schwerpunktslage automatisch eine optimale Verteilung des Aufbaugewichts auf alle vier Räder eingestellt, indem Druckunterschiede in den Gaspolstern der Federelemente bis zu einem kleinstmöglichen Druckunterschied ausgeglichen werden, wobei immer ein Federelement als letztes das Niveauvolumen erreicht.

Wenn die Radlasten zusammengehöriger Federelemente sehr verschieden sind, beispielsweise die einer Vorderachse und einer Hinterachse, oder auch aus anderen Gründen die die Radlast tragenden auf das Rad reduzierten Flächen der Trennkolben, deren Hub mit dem Radhub übereinstimmt, von unterschiedlicher Größe gewählt werden, verhalten sich die Niveauvolumina zweckmäßig proportional oder angenähert proportional den Flächen der Trennkolben, da in diesem Fall die Gasmengen bei Niveau und die Trimm-Mengen derartiger Federelemente gleich groß sind.

Bei gleichsinnigen Fahrzeugbewegungen, beispielsweise auch bei Tauch- oder Nick- oder Wankschwingungen ist über die Lageregelelemente ein direkter Gasaustausch zwischen Gaspolstern verschiedenen Drucks von gleichzeitig aus- oder einfedernden Federelementen möglich, wodurch unerwünschte Radlaständerungen eintreten können. Um dies zu verhindern, können zwischen den Ablaßleitungen und der Eintrittskammer des Verdichters Rückschlagventile vorgesehen werden, die in Richtung auf die Eintrittskammer öffnen, oder/und zwischen den Speiseleitungen und der Austrittskammer des Verdichters Rückschlagventile, die in Richtung auf die Austrittskammer schließen. So verhindern die vor der Eintrittskammer angeordneten Rückschlagventile einen Gasaustausch zwischen gleichzeitig ausfedernden Federelementen und die vor der Austrittskammer angeordneten Rückschlagventile einen Gasaustausch zwischen gleichzeitig einfedernden Federelementen.

Wenn bei einem Fahrzeug mit einer Federung nach der Erfindung für vier oder mehr Räder gefordert ist, daß die Radlasten von zwei oder mehr Federelementen gleich groß sind, können Verbindungsleitungen der Ablaß- oder Speiseleitungen vorgesehen sein, wodurch bei gleichzeitigem Aus- oder Einfedern der zugeordneten Federelemente jeweils ein Gasaustausch erfolgt und gleiche Radlasten herstellt. Wenn dies verzögert vorgehen soll, können die Verbindungsleitungen mit einer Drosseleinrichtung versehen werden. Bei einer Anordnung dieser Verbindungsleitungen bleibt der stabilisierende Effekt erhalten, daß der Verdichter zum Ausgleich der Fahrzeugneigung Gas von den ausgefederten in die eingefederten Federelemente fördert. Gleiche Radlasten können auch erreicht werden, wenn einzelne Rückschlagventile in Fortfall kommen oder mit einer Drosselöffnung, beispielsweise in Form einer Undichtheit versehen werden.

Nicht erfindungswesentliche Erläuterungen und Zahlenbeispiele, insbesondere auch für den Nachweis einer kleinen Berdichterleistung können der deutschen Offenlegungsschrift DT-OS 3 604 068 entnommen werden.

In der folgenden Beschreibung von Ausführungsbeispielen der Erfindung wird auf die Zeichnung bezuggenommen. Es zeigen:

Fig. 1 eine Federgruppe mit zwei Federelementen, die mit einem Niederdruckspeicher korrespondieren, mit Trennkolben in der Soll-Lage,

Fig. 2 die Federgruppe nach Fig. 1 im Ausschnitt mit durch eine Lasterhöhung eingefederten Trennkolben und einer offenen Sperreinrichtung,

Fig. 3 die Federgruppe nach Fig. 1 im Ausschnitt mit durch eine Lastminderung ausgefederten Trennkolben und offener Sperreinrichtung,

Fig. 4 die Federgruppe nach Fig. 1 im Ausschnitt in von Massenkräften beeinflußten Fahrzuständen mit einem eingefederten und einem ausgefederten Trennkolben und einer gesperrten Sperreinrichtung,

Fig. 5 eine Federgruppe mit zwei Federelementen anderer Art, die mit einem Gasspeicher von beliebigem Druck korrespondieren, mit durch eine Lasterhöhung eingefederten Trennkolben und offenen Sperreinrichtungen, wobei der Gasspeicher also Niederdruckspeicher wirksam ist,

Fig. 6 die Federgruppe nach Fig. 5 im Ausschnitt mit durch eine Lastminderung ausgefederten Trennkolben und offenen Sperreinrichtungen, wobei der Gasspeicher als Hochdruckspeicher wirksam ist,

Fig. 7 vier Federelemente mit Lageregelelementen beliebiger Art und Rückschlagventilen in der Eintrittskammer und der Austrittskammer des Verdichters.

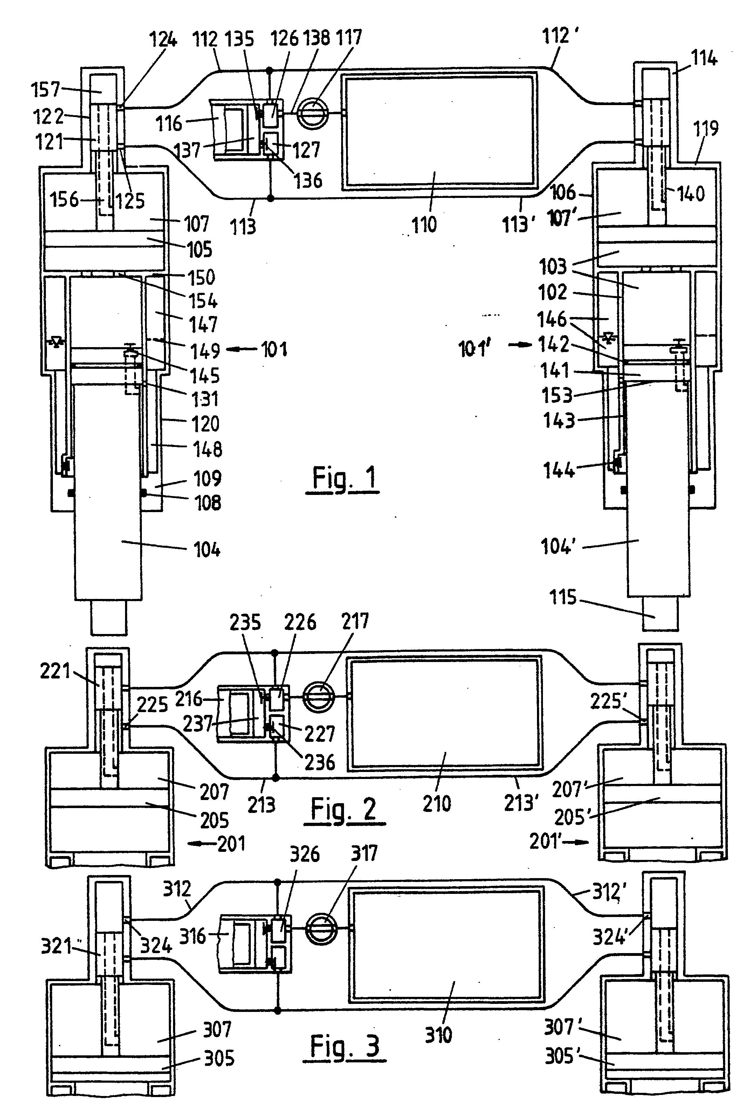

In den Figuren 1 bis 6 sind zwei Federelemente einer Federgruppe dargestellt, die beispielsweise als ein linkes und ein rechtes Federelement einer Fahrzeugachse aufzufassen sind. Für gleiche Teile gelten links und rechts dieselben Hinweiszeichen. Wenn eine Unterscheidung erforderlich ist, sind die Hinweiszeichen auf der rechten Seite mit einem Strich versehen.

Eine Federgruppe nach Fig. 1 weist zwei hydropneumatische Federelemente 101 und 101' auf, mit Anschlußpunkten in Form von Befestigungsstiften 114 und 115, mit einem in einem Arbeitszylinder 102 eingeschlossenen Ölvolumen 103, in dem ein in dem Arbeitszylinder 102 verschieblicher und aus diesem durch einen mit einer Dichtung 108 versehenen Zylinderdeckel 109 nach außen tretender Arbeitskolben 104 Öl verdrängt und auf der dem Arbeitskolben 104 abgewandten Seite ein durch einen Trennkolben 105 dicht von dem Ölvolumen 103 abgetrenntes, in einem Gehäuse 106 mit einem Boden 119 eingeschlossenes Gaspolster 107 bzw. 107' das verdrängte Öl aufnimmt, wobei das Ölvolumen 103 durch eine Zwischenwand 150 mit der Schwingungsdämpfung dienenden Drosselquerschnitten 154 unterteilt ist; mit einem an dem Trennkolben 105 mittels einer Steuerstange 140 gehaltenem Lageregelelement in Form eines Steuerschiebers 121, der gegenüber einer Steuerhülse 122 verschieblich ist, die sich in dem mit dem Boden 119 verbundenen Befestigungsstift 114 befindet. Die Steuerhülse 122 ist mit einer oberen Steueröffnung 124 versehen, in die eine Ablaßleitung 112 bzw. 112' mündet, und mit einer unteren Steueröffnung 125, in die eine Speiseleitung 113 bzw. 113' mündet und hat einen oberhalb des Steuerschiebers 121 angeordneten Freiraum 157, der mit dem Gaspolster 107 durch einen Kanal 156 in der Steuerstange 140 verbunden ist. Die Ablaßleitungen 112 und 112' der beiden Federelemente 101 und 101' sind gemeinsam an eine Eintrittskammer 126 eines Verdichters 116 und die Speiseleitungen 113 and 113' gemeinsam an eine Austrittskammer 127 des Verdichters 116 angeschlossen, der ein Einlaßventil 135, ein Auslaßventil 136 und einen Kompressionsraum 137 hat.

Ein Niederdruckspeicher 110 ist an die Eintrittskammer 126 des Verdichters 116 über eine mit einer Sperreinrichtung in Form eines Drehschiebers 117 versehene Verbindungsleitung 138 angeschlossen, wobei der Drehschieber 117 offenen Durchgang hat. Die Trennkolben 105 befinden sich links und rechts in ihrer Soll-Lage, in der die Steueröffnungen 124 und 125 beide durch den steuerschieber 121 abgedeckt sind, so daß kein Gasaustausch der Gaspolster 107 und 107' mit dem Niederdruckspeicher 110 möglich ist.

Wenn nach Fig. 2 die Trennkolben 205 und 205' eingefedert sind, werden die unteren Steueröffnungen 225 und 225' vom Steuerschieber 221 freigegeben und besteht eine Verbindung der Gaspolster 207 und 207' beider Federelemente 201 und 201' über die Speiseleitungen 213 und 213', die Austrittskammer 227, das Auslaßventil 236, den Kompressionsraum 237, das Einlaßventil 235, die Eintrittskammer 226 und den offenen Drehschieber 217 mit dem Niederdruckspeicher 210. Bei laufendem Verdichter 216 fungiert die Austrittskammer 227 als Gasquelle und kann eine Rückführung der Trennkolben 205 und 205' in die Soll-Lage nach Fig. 1 in beliebiger Reihenfolge und eine Niveauregelung durch eine Erhöhung der Gasmengen in den Gaspolstern 207 und 207' erfolgen.

Wenn nach Fig. 3 die Trennkolben 305 und 305' ausgefedert sind, werden die oberen Steueröffnungen 324 und 324' vom Steuerschieber 321 freigegeben und besteht eine Verbindung der Gaspolster 307 une 307' über die Ablaßleitungen 312 und 312', die Eintrittskammer 326 und den offenen Drehschieber 317 mit dem Niederdruckspeicher 310, der als Gassenke fungiert, und so kann eine Rückführung der Trennkolben 305 und 305' in die Soll-Lage nach Fig. 1 in beliebiger Reihenfolge und eine Niveauregelung durch Vermindern der Gasmengen in den Gaspolstern 307 und 307' erfolgen.

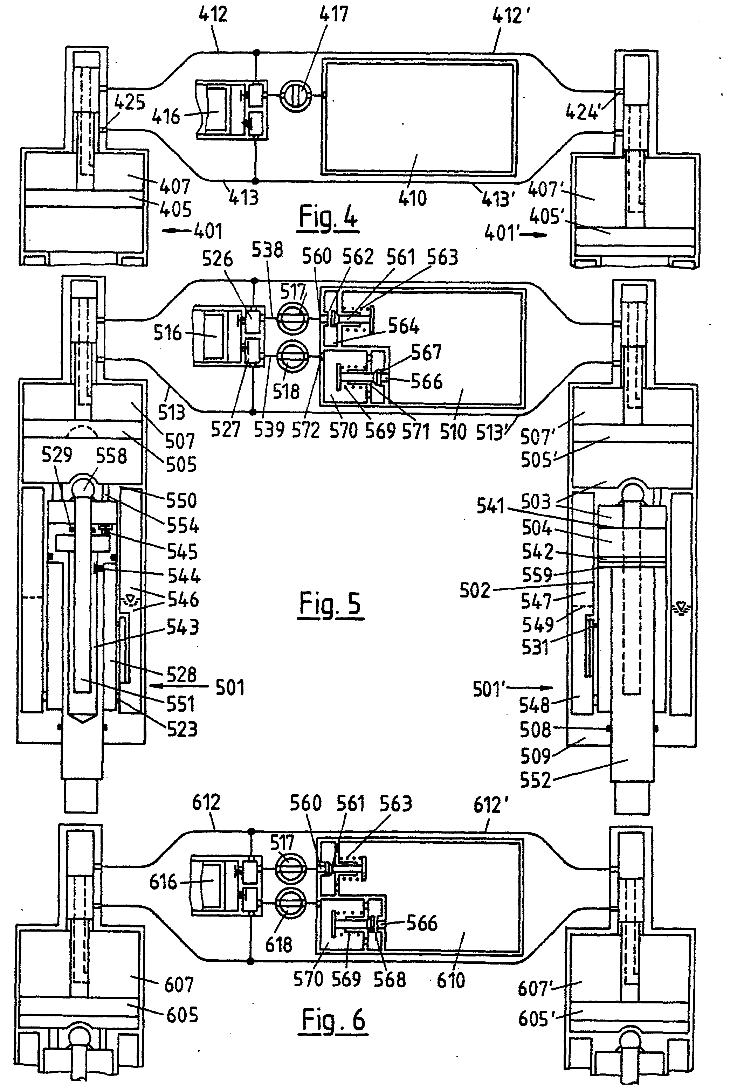

Wenn nach Fig. 4 der linke Trennkolben 405 eingefedert und der rechte 405' ausgefedert sind, beispielsweise in einer Rechtskurve durch eine Zusatzlast des Federelements 401 und eine Minderlast des Federelments 401', werden links die untere Steueröffnung 425 und rechts die obere Steueröffnung 424' freigegeben und besteht eine Verbindung des Gaspolsters 407 links mit dem Gaspolster 407' rechts über die linke Speiseleitung 413, den Verdichter 416 und die rechte Ablaßleitung 412', wobei der Drehschieber 417 nach einer Niveauregelung der Tragslast gemäß Fig. 2 oder 3 gesperrt sei, wie gezeichnet, und keine Verbindung zum Niederdruckspeicher 410 besteht. Nunmehr kann eine Rückführung der Trennkolben 405 und 405' in die Soll-Lage durch Förderung der Trimm-Menge mit Hilfe des Verdichters 416 von rechts nach links aus dem Gaspolster 407' dessen Gasmenge vermindert wird, in das Gaspolster 407, dessen Gasmenge erhöht wird, und eine Aufrichtung des Aufbaus bis zur Soll-Lage erfolgen. Wenn nach der Rechtskurve eine Zusatzlast des Federelements 401 und eine Minderlast des Federelements 401' fortfallen, dreht sich die Lage der Trennkolben 405 und 405' um und besteht eine Verbindung des linken Gaspolsters 407 mit dem rechten 407' uber die linke Ablaßleitung 412, den Verdichter 416 und die rechte Speiseleitung 413'. Nunmehr kann eine Rückführung der Trennkolben durch Rückfluß der Trimm-Menge mit oder ohne Hilfe des Verdichters 416 von links nach rechts aus dem Gaspolster 407, dessen Gasmenge wieder vermindert wird, in das Gaspolster 407' erfolgen, dessen Gasmenge wieder erhöht wird.

Die Federelemente 101 und 101' nach Fig. 1 weisen weitere Merkmale auf, die nicht unter den Schutzbereich der Erfindung fallen. Die Arbeitskolben 104 und 104' sind mit einem Kolbenkopf 141 versehen, der in dem Arbeitszylinder 102 geführt und gegenüber diesem durch eine Gleitdichtung 142 gedichtet ist, und bilden mit dem Arbeitszylinder 102 einen ringförmigen Pumpenraum 143, dessen Pumpenkolben die Ringfläche 153 des Kolbenkopfes 141 ist. Zwischen dem Zylinderdeckel 109 und der Zwischenwand 150 befindet sich ein den Arbeitszylinder 102 umgebender und von einem Außenrohr 120 umhüllter Ölspeicher 146, der in seinem unteren Teil eine Ölfüllung 148 und in seinem oberen Teil eine unter Druck stehende Gasfüllung 147 aufweist, wobei zwischen Ölfüllung 148 und Gasfüllung 147 ein freier Ölspiegel 149 besteht. Der Pumpenraum 143 ist mit der Ölfüllung 148 durch ein Saugventil 144 und mit dem Ölvolumen 103 durch ein Druckventil 145 verbunden und außerdem mit dem Ölvolumen 103 durch eine den Arbeitszylinder 102 durchbrechende und vom Kolbenkopf 141 gesteuerte Drosselöffnung 131, die in der gezeichneten Stellung zur Hälfte vom Kolbenkopf 141 freigegeben ist. Bei Schwingbewegungen des Arbeitskolbens 104 wird Öl aus dem Ölspeicher 146 gesaugt gesaugt und in das Ölvolumen 103 gefördert und strömt Öl aus dem Ölvolumen 103 in den Ölspeicher 146 durch die Drosselöffnung 131 zurück, sobald der Kolbenkopf 141 bei einem Ausfedern des Arbeitskolbens 104 die Drosselöffnung 131 frei gibt. Dabei stellt sich ein Gleichgewicht ein und wird eine ölseitige Niveauregelung bewirkt, wobei das geregelte Niveau der gezeichneten Stellung des Federkolbens 104 entsprechen möge. Die durch den Pumpenraum 143 geleistete Arbeit stellt eine lastabhängige Dämpfung dar und verbessert die Dämpfungseigenschaften.

Bei der Federgruppe nach Fig. 5 sind im Bereich der Trennkolben 505 und 505' die Teile der Federgruppe nach Fig. 1 übernommen und nur im Bedarfsfall mit Hinweiszeichen versehen. Ein Gasbehälter 510, der als Niederdruckspeicher wirksam sei, ist über eine mit einem ersten Drehschieber 517 versehene Verbindungsleitung 538 an eine Eintrittskammer 526 eines Verdichters 516 und über eine mit einem zweiten Drehschieber 518 versehene zweite Verbindungsleitung 539 an die Austrittskammer 527 des Verdichters 516 angeschlossen. Die Verbindungsleitung 538 mündet über einen durch ein Ventil 561 verschließbaren Einlaßkanal 560 in eine Ventilkammer 564, die mit dem Gasbehälter 510 in offener Verbindung steht. Eine Ventilfeder 563 bewirkt, daß zwischen Einlaßkanal 560 und Ventil 561 ein Ventilspalt 562 besteht, und so kann bei offenem Drehschieber 517, wie gezeichnet, eine Rückführung der Trennkolben 505 und 505' erfolgen, genau wie bei der Federgruppe nach Fig. 2 beschrieben. Die Verbindungsleitung 539 mündet über eine Auslaßöffnung 572 in eine Ventilkammer 570, die mit einer Halterung 571 für ein Ventil 567 versehen ist, und über einen durch das Ventil 567 verschließbaren Auslaßkanal 566 in den Gasbehälter 510 führt.

Eine Ventilfeder 569 ist so schwach bemessen, daß bei dem gegebenen Überdruck der Gaspolster 505 und 505' das Ventil 567 den Auslaßkanal 566 geschlossen hält, und so kann trotz des offenen Drehschiebers 518, wie gezeichnet, und des Unterdrucks im Gasbehälter 510 eine Rückführung der Trennkolben 507 und 507' über die Speiseleitungen 513 und 513' erfolgen. Wenn der Fall eintritt, daß der Druck im Gasbehälter 510 höher ist als in den Gaspolstern 507 und 507' und so der Gasbehälter 510 als Hochdruckspeicher wirksam wird, kann der Ventilspalt 562 unter dem Einfluß der Ventilfeder 563 offen bleiben, wird das Ventil 567 durch den überdruck im Gasbehälter 510 aufgestoßen und kann eine Erhöhung der Gasmengen in den Gaspolstern 507 und 507' direkt aus dem Gasbehälter 510 über den jetzt offenen Auslaßkanal 566 erfolgen.

Bei der Federgruppe nach Fig. 6 erfolgt ein Ablassen von Gas aus den Gaspolstern 607 und 607' über die Ablaßleitungen 612 und 612', den laufenden Verdichter 616, den offenen Drehschieber 618 und die Ventilkammer 570 gegen den Überdruck des Gasbehälters 610, wobei unter Wirkung der Ventilfeder 569 zwischen der Ventilkammer 570 und dem Auslaßkanal 566 ein Ventilspalt 568 besteht. Der überdruck im Gasbehälter 610 hält den Einlaßkanal 560 mittels des Ventils 561 gegen die entsprechend schwach bemessene Federkraft der Ventilfeder 563 geschlossen, und so kann trotz des offenen Drehschiebers 517 und des überdrucks im Gasbehälter eine Rückführung der Trennwände 607 und 607' über die Ablaßleitungen 612 und 612' erfolgen.

Die Federelemente 501 und 501' nach Fig. 5 weisen weitere Merkmale auf, die nicht unter den Schutzbereich der Erfindung fallen. Die Arbeitskolben sind als ein in einem Arbeitszylinder 502 geführter und durch eine Dichtung 542 gedichteter Stufenkolben 504 ausgebildet, dessen Kolbenstange 552 aus einem mit einer Dichtung 508 versehenen Zylinderdeckel 509 nach außen tritt. Die große Kreisfläche 541 des Stufenkolbens 504 verdrängt Öl aus dem in dem Arbeitszylinder 502 eingeschlossénen Ölvolumen 503, das durch eine Zwischenwand 550 mit Drosselquerschnitten 554 unterteilt ist. Die Kolbenstange 552 bildet mit dem Arbeitszylinder 502 einen Ringraum 528, aus dem die Kreisringfläche 559 Öl in einen den Arbeitszylinder 502 umgebenden Ölspeicher 546 über Öffnungen 523 im Bereich des Zylinderdeckels 509 verdrängt, wobei der Ölspeicher 546 in seinem unteren Teil eine Ölfüllung 548 und in seinem oberen Teil eine unter Druck stehende Gasfüllung 547 aufweist und zwischen beiden Füllungen ein freier Ölspiegel 549 besteht. Die vom Druck der Gasfüllung 547 auf die Kreisringfläche 559 ausgeübte Kraft wirkt für die Kolbenstange 552 als Zugkraft, so daß die Federelemente 501 und 501' eine Traglast gleich der auf die große Kreisfläche 541 vom Gaspolster 507 ausgeübten Druckkraft abzüglich der Zugkraft der Kreisringfläche 559 ist. Die hohl ausgeführte Kolbenstange 552 bildet einen Pumpenraum 543, in den eine mittels eines Kugelgelenks 558 an der Zwischenwand 550 befestigte Pumpenstange 551 eindringt, durch eine Dichtung 529 gedichtet. Der Pumpenraum 543 ist mit dem Ringraum 528 durch ein Saugventil 544 und mit dem Ölvolumen 503 durch ein Druckventil 545 verbunden und außerdem mit dem Druckspeicher 546 durch eine vom Stufenkolben 504 gesteuerte Drosselöffnung 531 im Arbeitszylinder 502. Pumpenstange 551 und Pumpenraum 543 haben dieselben, oben beschriebenen Wirkungen wie die Ringfläche 159 und Pumpenraum 143 der Federelemente 101 nach Fig. 1.

Einer Abstimmung von Federung und Dämpfung dienen Drosselöffnungen 154 oder 554 nach Fig. 1 oder 5 in den Zwischenwänden 150 oder 550, die geschwindigkeitsabhängige Dämpfungskräfte erzeugen. Lastabhängige Dämpfungskräfte wind bei selbstpumpenden Federelementen in bekannter Weise durch die Pumparbeit der Ringfläche 159 des Kolbenkopfes 141 nach Fig. 1 oder der Pumpenstange 551 nach Fig. 5 gegeben und durch die Größe der jeweiligen Pumpenfläche oder auch durch Drosselwiderstände der Saug- und Druckventile 143 und 144 oder 543 und 544 veränderbar. Bei der erfindungsgemäßen Regelung hat auch die gasseitige Verbindung der Federelemente, insbesondere bei niederfrequenten Aufbauschwingungen einen Einfluß auf die Dämpfungskräfte. Wenn nämlich bei wechselseitigen Schwingungen (vgl. Fig. 4) eines Aufbaus oder bei gleichsinnigen Schwingungen (vgl. Fig. 2 und Fig. 3) in den Gaspolstern zusammengehöriger Federelemente Druckunterschiede vorliegen und ein Gastransport von einem zu einem anderen Federelement erfolgt, werden dadurch die Traglasten der Federelemente geändert und Differenzkräfte erzeugt, die als Dämpfungskräfte in Erscheinung treten. Dieser Umstand kann für die Abstimmung von Federung und Dämpfung benutzt werden, insbesondere auch dadurch, daß die die Schwingungen ohne Gastransport festlegende Ansprechempfindlichkeit bei der Rückführung der Trennkolben in die Soll-Lage verändert wird, indem beispielsweise die Überdeckungen von Steuerschieber 121 und Steueröffnungen 124 und 125 entsprechend groß gewählt werden. Hierdurch kann auch verhindert werden, daß bei grösseren Druckunterschieden zusammengehöriger Federelemente in störender Weise viel Gas aus den Gaspolstern höheren Drucks in die Gaspolster niederen Drucks abfließt. Um dies zu beeinflussen, können auch Drosseleinrichtungen in den Speiseleitungen oder Abflußleitungen vorgesehen sein.

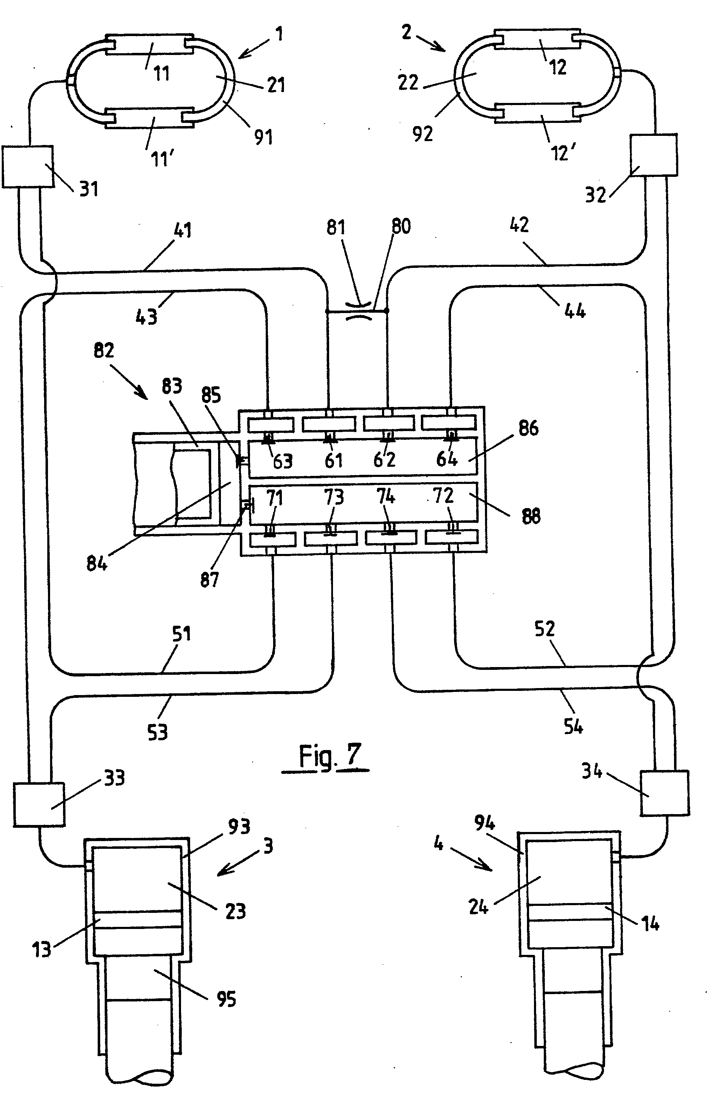

Zwei - angenommen - vordere pneumatische Federelemente 1, 2 nach Fig. 7 weisen in Gehäusen 91, 92 eingeschlossene Gaspolster 21, 22 und obere Trennkolben 11, 12 sowie untere Trennkolben 11', 12' auf, die auf der Außenseite von der Radlast und auf der Innenseite von dem pneumatischen Druck der Gaspolster 21, 22 beaufschlagt sind. Zwei - angenommen - hintere hydropneumatische Federelemente 3, 4 weisen in Gehäusen 93, 94 eingeschlossene Gaspolster 23, 24 und Trennkolben 13, 14 auf, die auf der Seite eines mit Öl gefüllten hydraulischen Arbeitszylinders 95 von der Radlast und auf der anderen Seite von dem pneumatischen Druck der Gaspolster 23, 24 beaufschlagt sind. Die Gaspolster 21, 22, 23, 24 sind mit Lageregelelementen 31, 32, 33, 34 bekannter Art verbunden, die die Lage der Trennkolben 11, 12, 13, 14 erfassen und bei einer Abweichung von einer Soll-Lage eine Verbindung mit Ablaßleitungen 41, 42, 43, 44 oder Speiseleitungen 51, 52, 53, 54 herstellen. Die Ablaßleitungen 41, 42, 43, 44 münden jede für sich in eine Eintrittskammer 86 eines Verdichters 82 über Rückschlagventile 61, 62, 63, 64, die in Richtung auf die Eintrittskammer 86 öffnen. Die Speiseleitungen 51, 52, 53, 54 münden jede für sich in eine Austrittskammer 88 des Verdichters 82 über Rückschlagventile 71, 72, 73, 74, die in Richtung auf die Austrittskammer 88 schliessen. Der Verdichter 82 weist einen Verdichterkolben 83 und einen Verdichterzylinder 84 auf, aus dem ein Einlaßventil 85 in die Eintrittskammer 86 und ein Auslaßventil 87 in die Austrittskammer 88 führen. Zwischen den Ablaßleitungen 41 und 42 ist eine Verbindungsleitung 80 im Bereich vor den Rückschlagventilen 61 und 62 angeordnet, die mit einer Drosseleinrichtung 81 versehen ist.

Die Lageregelelemente 31, 32, 33, 34 sind so geschaltet, daß sie bei einer durch ein ausgefedertes Federelement bedingten Abweichung der Trennkolben 11, 12, 13, 14 von einer Soll-Lage eine Verbindung der Gaspolster 21, 22, 23, 24 mit den Ablaßleitungen 41, 42, 43, 44 und bei einer durch ein eingefedertes Federelement bedingten Abweichung eine Verbindung der Gaspolster 21, 22, 23, 24 mit den Speiseleitungen 51, 52, 53, 54 herstellen. Der Verdichter 82 fördert direkt Gas aus den Gaspolstern von ausgefederten Federelementen in die Gaspolster von eingefederten Federelementen zum Ausgleich der Fahrzeugneigung bei dynamischen Fahrbewegungen wobei jeweils eines oder mehrere der Rückschlagventile 61, 62, 63, 64 und 71, 72, 73, 74 öffnen. Beispielsweise wird bei ausgefederten Federelementen 2 und 4 und eingefederten Federelementen 1 und 3 in einer Rechtskurve Gas aus den Gaspolstern 22 und 24 über die Ablaßleitungen 42 und 44 mit Hilfe des Verdichters 82 über die Speiseleitungen 51 und 53 in die Gaspolster 21 und 23 gefördert, bis die Soll-Lage der Trennkolben 11, 12, 13, 14 wieder erreicht ist. Die den Ablaßleitungen 42 und 44 zugeordneten Rückschlagventile 62 und 64 verhindern hierbei in vorteilhafter Weise einen Druckausgleich zwischen den Gaspolstern 22 und 24; die den Speiseleitungen 51 und 53 zugeordneten Rückschlagventile 71 und 73 verhindern einen Druckausgleich zwischen den Gaspolstern 21 und 23. Wenn nach der Kurve die vorher ausgefederten Federelemente 2 und 4 zu eingefederten Federelementen 2 und 4 und die vorher eingefederten Federelemente 1 und 3 zu ausgefederten Federelementen 1 und 3 werden, fließt Gas aus den Gaspolstern 21 und 23 über die Ablaßleitungen 41 und 43 und die Speiseleitungen 52 und 54 in die Gaspolster 22 und 24 zurück, bis die Soll-Lage der Trennkolber 1, 12, 13, 14 wieder erreicht ist, wobei für den Rückfluß ein positives Druckgefälle besteht und der Verdichter 82 laufen kann oder auch nicht. Bei ausgefederten Federelementen 3 und 4 und eingefederten Federelementen 1 und 2 infolge eines Bremsvorganges spielt sich in sinngemässer Weise ein Gastransport von den Gaspolstern 23 und 24 in die Gaspolster 21 und 22 ab und nach dem Aufhören des Bremsvorganges ein Gastransport zurück aus den Gaspolstern 21 und 22 in die Gaspolster 23 und 24. Beim Bremsen in einer Kurve erfolgt in entsprechender Weise ein Gastransport diagonal zwischen den Gaspolstern 21 und 24 und den Gaspolstern 22 und 23.

Wenn die Traglasten der Federelemente 1 und 2 untereinander gleich sein sollen, wird dies durch die Verbindungsleitung 80 erreicht, indem bei gleichzeitigem Ausfedern dieser Federelemente bei einem Nicken oder Tauchen des Fahrzeugs die Gaspolster 21 und 22 über die Ablaßleitungen 41 und 42 mittels der Verbindungsleitung 80 den Gasdruck einander anpassen. Das Anpassen des Gasdrucks kann durch die Drosseleinrichtung 81 in einer erwünschten Weise verzögert werden.

Gegenstand des Ausführungsbeispiels nach Fig. 7 ist ausschließlich eine Neigungsregelung nach der Erfindung, während eine Niveauregelung in der Art nach den Patentansprüchen 1, 2, 3 oder 9 erfolgen kann.

Die Verbindungsleitungen von den Gaspolstern zu den Lageregelelementen sind ein Teil des federnden Gasvolumens. Wenn diese Leitungen durch die Lageregelelemente mit den Ablaß- und Speiseleitungen verbunden sind, werden auch die Ablaß- oder Speiseleitungen ein Teil des federnden Gasvolumens, wodurch u.U. das federnde Gasvolumen ungünstig beeinflußt werden kann. Um dies zu verhindern, kann der Abstand der Lageregelelemente vom Verdichter klein oder mindestens kleiner als der Abstand der Federelemente vom Verdichter ausgeführt werden. So können die Lageregelelemente dicht an den Verdichter herangerückt werden und ein Einfluß des Volumens der Ablaß- und Speiseleitungen auf das federnde Gasvolumen ganz oder nahezu ausgeschaltet werden.

**Patentansprüche**

1. Niveau- und Neigungsregelung für ein Fahrzeug
- mit mindestens zwei, jeweils einem Rad einer Achse oder Seite zugeordneten pneumatischen oder hydropneumatischen Federelementen (101, 101')
- die einen beweglichen Trennkolben (105) aufweisen, der auf der einen Seite von der Radlast und auf der anderen Seite von einem diese abstützenden pneumatischen Druck eines in einem Gehäuse eingeschlossenen Gaspolsters beaufschlagt ist,
- wobei jeweils den einzelnen Federelementen der Achse zugeordnete Lageregelelemente vorhanden sind, die die Lage des Trennkolbens in bezug zu einer Soll-Lage erfassen und bei einer Abweichung von der Soll-Lage Gas aus dem Federelement über eine Ablaßleitung in einen Niederdruck-Speicher (110) ablassen oder über eine Speiseleitung Gas zuführen, die durch einen Verdichter (116) aus dem Niederdruck-Speicher geladen wird, gekennzeichnet durch die Merkmale:
- der Niederdruckspeicher (110) wird, willkürlich über eine Sperreinrichtung (Drehschieber 117) zu- und abschaltbar, als Abzweig an die Eintrittskammer (126) des Verdichters (116) angeschlossen,
- so daß bei durch willkürliche Betätigung der Sperreinrichtung (Drehschieber 117) erfolgender Zuschaltung des Gasvolumens des Niederdruckspeichers (110) eine statische Niveauregelung erfolgt, während bei abgeschaltetem Gasvolumen des Niederdruckspeichers (110) der Verdichter (116) direkt Gas aus dem ausgefederten in das eingefederte Federelement zum umgehenden Ausgleich der Seitenneigung bei dynamischen Fahrbewegungen fördert.

2. Niveau- und Neigungsregelung für ein Fahrzeug
- mit mindestes zwei, jeweils einem Rad einer Achse oder Seite zugeordneten pneumatischen oder hydropneumatischen Federelementen (101, 101'),
- die einen beweglichen Trennkolben (105) aufweisen, der auf der einen Seite von der Radlast und auf der anderen Seite von einem diese abstützenden pneumatischen Druck eines in einem Gehäuse eingeschlossenen Gaspolsters beaufschlagt ist,
- wobei jeweils den einzelnen Federelementen der Achse zugeordnete Lageregelelemente vorhanden sind, die die Lage des Trennkolbens in bezug zu einer Soll-Lage erfassen und bei einer Abweichung von der Soll-Lage dem Federelement über eine Speiseleitung Gas aus einem Hochdruckspeicher zuführen oder über eine Ablaßleitung ablassen, aus der der Hochdruckspeicher durch einen Verdichter geladen wird, gekennzeichnet durch die Merkmale:
- der Hochdruckspeicher wird, willkürlich über eine Sperreinrichtung zu- und abschaltbar, als Abzweig an die Austrittskammer des Verdichters angeschlossen,
- so daß bei durch willkürliche Betätigung der Sperreinrichtung erfolgender Zuschaltung des Gasvolumens des Hochdruckspeichers eine statische Niveauregelung erfolgt, während bei abgeschaltetem Gasvolumen des Hochdruckspeichers der Verdichter direkt Gas aus dem ausgefederten in das eingefederte Federelement zum umgehenden Ausgleich der Seitenneigung bei dynamischen Fahrbewegungen fördert.

3. Niveau- und Neigungsregelung für ein Fahrzeug
- mit mindestens zwei, jeweils einem Rad einer Achse oder Seite zugeordneten pneumatischen oder hydropneumatischen Federelementen (101, 101'),
- die einen beweglichen Trennkolben (105) aufweisen, der auf der einen Seite von der Radlast und auf der anderen Seite von einem diese abstützenden pneumatischen Druck eines in einem Gehäuse eingeschlossenen Gaspolsters beaufschlagt ist,
- wobei jeweils den einzelnen Federelementen der Achse zugeordnete Lageregelelemente vorhanden sind, die die Lage des Trennkolbens in bezug zu einer Soll-Lage erfassen und bei einer Abweichung von der Soll-Lage Gas aus dem Federelement über eine Ablaßleitung mit einem Speicher in Verbindung gestellt wird, der durch einen Verdichter geladen wird, gekennzeichnet durch die Merkmale:
- der Speicher (Gasbehälter 510) wird, je nach Ladezustand als Niederdruckspeicher oder Hochdruckspeicher wirkend, über zwei willkürliche betätigbare Sperreinrichtungen (Drehschieber 517; 518) in einer ersten (538) und einer zweiten Verbindungsleitung (539) an die Eintrittskammer (526) bzw. die Austrittskammer (527) des Verdichters (516) angeschlossen,

- wobei eine statische Niveauregelung bei niederem Druck des Speichers (Gasbehälter 510) gegenüber den Federelementen (507; 507') bei offener erster Sperreinrichtung (Drehschieber 517) und geschlossener zweiter Sperreinrichtung (Drehschieber 518) und bei höherem Druck des Speichers (Gasbehälter 510) als dem der Federelemente (507; 507') bei geschlossener erster Sperreinrichtung (Drehschieber 517) und offener zweiter Sperreinrichtung (Drehschieber 518) erfolgt,
- während bei geschlossenen ersten und zweiten Sperreinrichtungen (Drehschieber 517 und 518) der Verdichter (516) direkt Gas aus dem ausgefederten in das eingefederte Federelement zum umgehenden Ausgleich der Seitenneigung bei dynamischen Fahrbewegungen fördert.

4. Niveau- und Neigungsregelung für ein Fahrzeug
- mit mindestens zwei, jeweils einem Rad einer Achse oder Seite zugeordneten pneumatischen oder hydropneumatischen Federelementen (1, 2, 3, 4),
- die einen beweglichen Trennkolben (11, 12, 13, 14) aufweisen, der auf der einen Seite von der Radlast und auf der anderen Seite von einem diese abstützenden pneumatischen Druck eines in einem Gehäuse eingeschlossenen Gaspolsters beaufschlagt ist,
- wobei jeweils den einzelnen Federelementen der Achse zugeordnete Lageregelelemente vorhanden sind, die die Lage des Trennkolbens in bezug zu einer Soll-Lage erfassen und bei einer Abweichung von der Soll-Lage Gas aus dem Federelement über eine Ablaßleitung ablassen, die in eine Eintrittskammer eines Verdichters mündet, oder über eine Speiseleitung zuführen, die in eine Austrittskammer des Verdichters mündet, dadurch gekennzeichnet:
- daß eine statische Niveauregelung durch eine willkürlich abschaltbare Niveauregeleinrichtung erfolgt, während unabhängig davon bei abgeschalteter Niveauregeleinrichtung der Verdichter (82) direkt Gas aus dem ausgefederten in das eingefederte Federelement zum umgehenden Ausgleich der Seitenneigung bei dynamischen Fahrbewegungen fördert.

5. Regelung nach Anspruch 3, dadurch gekennzeichnet, daß bei Lastanpassung beide Sperreinrichtungen (517 und 518) offen sind und bei Überdruck des Gasbehälters (510) gegenüber der Gaspolstern (507 oder 507') die erste Verbindungsleitung (538) durch zusätzliche auf den Überdruck ansprechende Mittel (Ventil 561) sperrbar ist und bei Unterdruck des Gasbehälters (510) gegenüber den Gaspolstern (507 oder 507') die zweite Verbindungsleitung (539) durch auf den Unterdruck ansprechende Mittel (Ventil 567) sperrbar ist.

6. Regelung nach den Ansprüchen 1 bis 5 dadurch gekennzeichnet, daß die Lageregelelemente als mit den Trennkolben (105) verbundene, selbsteinstellende Steuerschieber (121) ausgebildet sind.

7. Regelung nach den Ansprüchen 1 bis 6, dadurch gekennzeichnet, daß die Federelemente innerhalb eines durch Druck- und Zuganschläge begrenzten Hubbereichs der Federkolben einen Fahrzeugaufbau voll tragen und in von Massenkräften beeinflußten Fahrzuständen stabilisieren, wobei dieser Hubbereich frei oder nahezu frei von anderen Federmitteln ist.

8. Regelung nach den Ansprüchen 1 bis 7, dadurch gekennzeichnet, daß zwischen den Ablaßleitungen (41, 42, 43, 44) und der Eintrittskammer (86) des Verdichters (82) Rückschlagventile (61, 62, 63, 64) vorgesehen sind, die in Richtung auf die Eintrittskammer (86) öffnen.

9. Regelung nach den Ansprüchen 1 bis 8, dadurch gekennzeichnet, daß zwischen den Speiseleitungen (51, 52, 53, 54) und der Austrittskammer (88) des Verdichters (82) Rückschlagventile (71, 72, 73, 74) vorgesehen sind, die in Richtung auf die Austrittskammer (88) schließen.

10. Regelung nach den Ansprüchen 1 bis 9, dadurch gekennzeichnet, daß der Abstand der Lageregelelemente vom Verdichter klein oder mindestens kleiner als der Abstand der Federelemente vom Verdichter ausgeführt ist.

**Claims**

1. A level and inclination regulation for a vehicle comprising at least two pneumatic or hydraulic-pneumatic spring elements (101, 101') associated with respective wheels of an axle or a side and comprising a movable separating piston (105), which is acted upon on one side by the wheel load and on the other side by a pneumatic pressure which supports said wheel load and is applied by a gas cushion which is enclosed in a housing, position regulating elements are provided, which are associated with respective spring elements of the axle and detect the position of the separating piston relative to a desired position and in case of a deviation from the desired position will vent gas from the spring element via a vent line into a low-pressure accumulator (110) or feed gas through a feed line, which is charged by a compressor (116) from the low-pressure accumulator, characterized by the features:
the low-pressure accumulator (110) is connected as a branch to the inlet chamber (126) of the compressor (116) and is adapted to be arbitrarily connected and disconnected by a shut-off valve (rotary valve 117) so that the gas volume of the low-pressure accumulator (110) when it has been connected by an arbitrary actuation of the shut-off valve (rotary valve) (117) will effect a static level regulation whereas when the gas volume of the low-pressure accumulator (110) is disconnected the compressor (116) will directly feed gas from the resiliently extended spring element into the resiliently retracted one for an immediate compensation of the lateral inclination during dynamic running movements.

2. A level and inclination regulation for a vehicle comprising at least two pneumatic or hydraulic-pneumatic spring elements (101, 101') associated with respective wheels of an axle or a side and comprising a movable separating piston (105), which is acted upon on one side by the wheel load and on the other side by a pneumatic pressure which supports said wheel load and is applied by a gas cushion which is enclosed in a housing, position regulating elements are provided, which are associated with respective spring elements of the axle and detect the position of the separating piston relative to a desired position and in case of a deviation from the desired position will feed gas from a high-pressure accumulator or vent gas through a vent line, from which the high-pressure accumulator is charged by a compressor, characterized by the features:
the high-pressure accumulator is connected as a branch to the outlet chamber of the compressor and is adapted to be arbitrarily connected and disconnected by a shut-off valve so that the gas volume of the high-pressure accumulator will effect a static level regulation when said gas volume has been connected by an arbitrary actuation of the shut-off valve whereas when the gas volume of the high-pressure accumulator is disconnected the compressor will directly feed gas form the resiliently extended spring element into the resiliently retracted one for an immediate compensation of the lateral inclination during dynamic running movements.

3. A level and inclination regulation for a vehicle comprising at least two pneumatic or hydraulic-pneumatic spring elements (101, 101') associated with respective wheels of an axle or a side and comprising a movable separating piston (105), which is acted upon on one side by the wheel load and on the other side by a pneumatic pressure which supports said wheel load and is applied by a gas cushion which is enclosed in a housing, position regulating elements are provided, which are associated with respective spring elements of the axle and detect the position of the separating piston relative to a desired position and in case of a deviation from the desired position will connect gas from the spring element via a vent line to an accumulator, which is charged by a compressor, characterized by the features:
the accumulator (gas container 510) acts as a low-pressure accumulator or as high-pressure accumulator and is connected to the inlet chamber (526) or the outlet chamber (527) of the compressor by means of two arbitrarily operable shut-off valves (rotary valves 517; 518) in first (438) and second (539) connecting lines, a static level regulation will be effected when the pressure in the accumulator (gas container 510) is lower than the pressure in the spring elements (507; 507') and the first shut-off valve (rotary valve 517) is open and the second shut-off valve (rotary valve 518) is closed and when the pressure in the accumulator (gas-container 510) is higher than the pressure in the spring elements (507; 507') and the first shut-off valve (rotary valve 517) is closed and the second shut-off valve (rotary valve 518) is open, whereas the compressor (516) will feed gas directly form the resiliently extended spring element into the resiliently retracted one for an immediate compensation of the lateral inclination during dynamic running movements when the first and second shut-off valves (rotary valves 517 and 518) are closed.

4. A level and inclination regulation for a vehicle, comprising at least two pneumatic or hydraulic-pneumatic spring elements (1, 2, 3, 4), which are associated to respective wheels of an axle or side and comprise a movable separating piston (11, 12, 13, 14), which is acted upon on one side by the wheel load and on the other side by a pneumatic pressure which supports said wheel load and is applied by a gas cushion which is enclosed in a housing, position regulating elements are provided, which are associated with respective spring elements of the axle and detect the position of the separating piston relative to a desired position and in case of a deviation from the desired position will vent gas from the spring element via a vent line, which opens into an inlet chamber of a compressor, or will feed gas via a feed line, which opens into an outlet chamber of the compressor, characterized in that a static level regulation is effected by a level regulator, which is adapted to be arbitrarily disabled and independently thereof, when the level regulator is disabled, the compressor (82) will feed gas directly form the resiliently extended spring element into the resiliently retracted one for an immediate compensation of the lateral inclination during dynamic running movements.

5. A regulation according to claim 3, characterized in that both shut-off valves (517 and 518) are open during an adaptation of the load and when the pressure in the gas container (510) is higher than the pressure in the gas cushions (507 or 507') the first connecting line (538) is adapted to be shut off by additional means (valve 561), which respond to the overpressure, and when the pressure in the gas container (510) is lower than the pressure in the gas cushions (507 or 507') the second connecting line (539) is adapted to be shut off by means (valve 567), which respond to the underpressure.

6. A regulation according to claims 1 to 5, characterized in that the position regulating elements consist of self-adjusting sliding control valves (121), which are connected to the separating piston (105).

7. A regulation according to claims 1 to 6, chararterized in that the spring elements fully support a vehicle body and stabilize it in running states which are influenced by mass forces when the spring pistons of the spring elements are disposed within a range of displacement which is limited by compressive and tensile stops and said range of displacement is free or almost free of other spring means.

8. A regulation according to claims 1 to 7, characterized in that non-return valves (61, 62, 63, 64), are arranged between the vent lines (41, 42, 43, 44) and the inlet chamber (86) of the compressor (82) and open in the direction toward the inlet chamber (86).

9. A regulation according to claims 1 to 8, characterized in that non-return valves (71, 72, 73, 74) are provided between the feed lines (51, 52, 53, 54) and, the outlet chamber (88) of the compressor (82) and close in the direction toward the outlet chamber (88).

10. A regulation according to claims 1 to 9, characterized in that the distance from the position control element to the compressor is small or is at least smaller than the distance from the spring elements to the compressor.

**Revendications**

1. Réglage du niveau et de l'inclinaison pour un véhicule, comprenant au moins deux éléments amortisseurs pneumatiques ou hydropneumatiques (101, 101') associés chacun à une roue d'un essieu ou d'un côté et présentant un piston de séparation mobile (105) qui est sollicité d'un côté par la charge de roue et de l'autre côté par une pression pneumatique d'un coussin de gaz confiné dans un carter, destinée à supporter ladite charge de roue, aux différents éléments amortisseurs de l'essieu étant respectivement associés des éléments de réglage de position qui déterminent la position du piston de séparation par rapport à une position de consigne et, en cas d'écart par rapport à la position de consigne, évacuent, par l'intermédiaire d'une conduite d'évacuation, du gaz de l'élément amortisseur dans un réservoir à basse pression (110) ou alimentent ce dernier en gaz par l'intermédiaire d'une conduite d'alimentation laquelle est chargée par un compresseur (116) à partir du réservoir à basse pression, caractérisé en ce que le réservoir à basse pression (110), qui peut être raccordé et débranché à volonté par l'intermédiaire d'un dispositif d'arrêt (vanne rotative 117), est raccordé en tant que branchement à la chambre d'entrée (126) du compresseur (116), de sorte que la mise en circuit du volume de gaz du réservoir à basse pression (110) effectuée par l'actionnement volontaire du dispositif d'arrêt (vanne rotative 117) déclenche un réglage statique du niveau, tandis que, lorsque le volume de gaz du réservoir à basse pression (110) est débranché, le compresseur (116) refoule directement du gaz de l'élément amortisseur en extension dans l'élément amortisseur en compression pour compenser immédiatement l'inclinaison latérale en cas de mouvements de translation dynamiques.

2. Réglage du niveau et de l'inclinaison pour un véhicule, comprenant au moins deux éléments amortisseurs pneumatiques ou hydropneumatiques (101, 101') associés chacun à une roue d'un essieu ou d'un côté et présentant un piston de séparation mobile (105) qui est sollicité d'un côté par la charge de roue et de l'autre côté par une pression pneumatique d'un coussin de gaz confiné dans un carter, destinée à supporter ladite charge de roue, aux différents éléments amortisseurs de l'essieu étant respectivement associés des éléments de réglage de position qui déterminent la position du piston de séparation par rapport à une position de consigne et, en cas d'écart par rapport à la position de consigne, amènent, par l'intermédiaire d'une conduite d'alimentation, du gaz à partir d'un réservoir à haute pression ou évacuent du gaz par l'intermédiaire d'une conduite d'évacuation à partir de laquelle le réservoir à haute pression est chargé par un compresseur, caractérisé en ce que le réservoir à haute pression, qui peut être raccordé et débranché à volonté par l'intermédiaire d'un dispositif d'arrêt, est raccordé en tant que branchement à la chambre de sortie du compresseur, de sorte que la mise en circuit du volume de gaz du réservoir à haute pression effectuée par l'actionnement volontaire du dispositif d'arrêt déclenche un réglage statique du niveau, tandis que, lorsque le volume de gaz du réservoir à haute pression est débranché, le compresseur refoule directement du gaz de l'élément amortisseur en extension dans l'élément amortisseur en compression pour compenser immédiatement l'inclinaison latérale en cas de mouvements de translation dynamiques.

3. Réglage du niveau et de l'inclinaison pour un véhicule, comprenant au moins deux éléments amortisseurs pneumatiques ou hydropneumatiques (101, 101') associés chacun à une roue d'un essieu ou d'un côté et présentant un piston de séparation mobile (105) qui est sollicité d'un côté par la charge de roue et de l'autre côté par une pression pneumatique d'un coussin de gaz confiné dans un carter, destinée à supporter ladite charge de roue, aux différents éléments amortisseurs de l'essieu étant respectivement associés des éléments de réglage de position qui déterminent la position du piston de séparation par rapport à une position de consigne et, en cas d'écart par rapport à la position de consigne, le gaz de l'élément amortisseur, par l'intermédiaire d'une conduite d'évacuation, étant mis en communication avec un réservoir qui est chargé par un compresseur, caractérisé en ce que le réservoir (réservoir de gaz 510) qui, selon l'état de charge, agit comme réservoir à basse pression ou réservoir à haute pression, est raccordé, par l'intermédiaire de deux dispositifs d'arrêt (vannes rotatives 517; 518) insérés dans une première conduite de connexion (538) et dans une seconde conduite de connexion (539) et actionnables à volonté, à la chambre d'entrée (526) et respectivement à la chambre de sortie (527) du compresseur (516), un réglage statique du niveau s'effectuant avec le premier dispositif d'arrêt (vanne rotative 517) ouvert et avec le second dispositif d'arrêt (vanne rotative 518) fermé lorsque la pression du réservoir (réservoir de gaz 510) est faible par rapport aux éléments amortisseurs (507, 507') et avec le premier dispositif d'arrêt (vanne rotative 517) fermé et avec le second dispositif d'arrêt (vanne rotative 518) ouvert lorsque la pression du réservoir (réservoir de gaz 510) est supérieure à celle des éléments amortisseurs (507; 507'), tandis que, lorsque les premier et second dispositifs d'arrêt (vannes rotatives 517 et 518) sont fermés, le compresseur (516) refoule directement du gaz de l'élément amortisseur en extension dans l'élément amortisseur en compression pour compenser immédiatement l'inclinaison latérale en cas de mouvements de translation dynamiques.

4. Réglage du niveau et de l'inclinaison pour un véhicule, comprenant au moins deux éléments amortisseurs pneumatiques ou hydropneumatiques (1, 2, 3, 4) associés chacun à une roue d'un essieu ou d'un côté et présentant un piston de séparation mobile (11, 12, 13, 14) qui est sollicité d'un côté par la charge de roue et de l'autre côté par une pression pneumatique d'un coussin de gaz confiné dans un carter, destinée à supporter ladite charge de roue, aux différents éléments amortisseurs de l'essieu étant respectivement associés des éléments de réglage de position qui déterminent la position du piston de séparation par rapport à une position de consigne et, en cas d'écart par rapport à la position de consigne, évacuent du gaz de l'élément amortisseur par l'intermédiaire d'une conduite d'évacuation qui débouche dans une chambre d'entrée d'un compresseur ou amènent du gaz par l'intermédiaire d'une conduite d'alimentation qui débouche dans une chambre de sortie du compresseur, caractérisé en ce qu'un réglage statique du niveau est réalisé par un dispositif de réglage de niveau pouvant être déconnecté à volonté, alors que, indépendamment de cela, lorsque le dispositif de réglage de niveau est déconnecté, le compresseur (82) refoule directement du gaz de l'élément amortisseur en extension dans l'élément amortisseur en compression pour compenser immédiatement l'inclinaison latérale en cas de mouvements de translation dynamiques.

5. Réglage selon la revendication 3, caractérisé en que, lors de l'adaptation de la charge, les deux dispositifs d'arrêt (517 et 518) sont ouverts, que, en cas de surpression du réservoir de gaz (510) par rapport aux coussins de gaz (507 ou 507'), la première conduite de connexion (538) peut être bloquée par des moyens supplémentaires (soupape 561) réagissant à la surpression, et que, en cas de dépression du réservoir de gaz (510) par rapport aux coussins de gaz (507 ou 507'), la seconde conduite de connexion (539) peut être bloquée par des moyens (soupape 567) réagissant à la dépression.

6. Réglage selon l'une des revendications 1 à 5, caractérisé en ce que les éléments de réglage de position sont conformés en vannes-pilotes (121) autoréglables reliées aux pistons de séparation (105).

7. Réglage selon l'une des revendications 1 à 6, caractérisé en ce que, à l'intérieur d'une plage de course des pistons d'amortisseurs limitée par des butées de pression et de traction, les éléments amortisseurs supportent entièrement une caisse de véhicule et la stabilisent à des allures de marche influencées par des forces proportionnelles à la masse, ladite plage de course étant dépourvue ou presque dépourvue d'autres moyens d'amortissement.

8. Réglage selon l'une des revendications 1 à 7, caractérisé en ce qu'il comprend entre les conduites d'évacuation (41, 42, 43, 44) et la chambre d'entrée (86) du compresseur (82), des clapets anti-retour (61, 62, 63, 64) qui s'ouvrent en direction de la chambre d'entrée (86).

9. Réglage selon l'une des revendications 1 à 8, caractérisé en ce qu'il comprend entre les conduites d'alimentation (51, 52, 53, 54) et la chambre de sortie (88) du compresseur (82), des clapets anti-retour (71, 72, 73, 74) qui se ferment en direction de la chambre de sortie (88).

10. Réglage selon l'une des revendications 1 à 9, caractérisé en ce que la distance entre les éléments de réglage de position et le compresseur est petite ou du moins plus petite que la distance entre les éléments amortisseurs et le compresseur.

_Fig. 1_

_Fig. 2_

_Fig. 3_

**Fig. 4**

**Fig. 5**

**Fig. 6**

Fig. 7